# EUROPÄISCHE PATENTSCHRIFT

(11) **EP 2 053 265 B1**
(45) Veröffentlichungstag und Bekanntmachung des Hinweises auf die Patenterteilung: **16.01.2013**
(21) Anmeldenummer: 08013808.4
(22) Anmeldetag: 01.08.2008
(51) Int. Cl.: F16D 65/00, F16D 65/12, F16D 69/02

(54) **Bremsvorrichtung für ein Kraftfahrzeug**
Braking device for a motor vehicle
Dispositif de frein pour un véhicule automobile

(30) Priorität: 26.10.2007 DE 102007051297
(43) Veröffentlichungstag der Anmeldung: 29.04.2009
(73) Patentinhaber: Audi AG, 85045 Ingolstadt (DE)
(72) Erfinder: Yarim, Rasim, Dr., 85053 Ingolstadt (DE); Waninger, Robert, 85055 Ingolstadt (DE)
(74) Vertreter: Asch, Konrad

(56) Entgegenhaltungen:
- DE-A1- 10 157 995
- DE-A1-102004 062 082
- US-A1- 2007 071 959
- US-B1- 6 585 089

## Beschreibung

Die Erfindung betrifft eine Bremsvorrichtung für ein Kraftfahrzeug gemäß der im Oberbegriff des Patentanspruchs 1 angegebenen Art.

Eine allgemein bekannte, gattungsgemäße Bremsvorrichtung für ein Kraftfahrzeug weist eine Bremsscheibe und einen Reibbelag auf. Konkret ist der Reibbelag durch einen Bremsbelag gebildet, wobei während eines Bremsvorganges eine Reibverbindung zwischen der Bremsscheibe und dem Bremsbelag hergestellt wird. Eine derartige gattungsgemäße Bremsvorrichtung ist beispielsweise in der DE 10 2004 062 082 A1 offenbart.

Bei der Herstellung von Bremsscheiben werden heutzutage vermehrt Mehrstoff-Verbundsysteme mit einer keramischen Matrix eingesetzt. Die dabei verwendete Matrix besteht bevorzugt aus Silizium (Si) oder Siliziumkarbiden (SiC), die Kohlenstofffasern oder kohlenstoffhaltige Fasern jeweils als Verstärkungsfasern enthält. Die hieraus gebildeten siliziuminfiltrierten Kohlenstofffaser-Verbundwerkstoffe weisen auch bei hohen Belastungen und/oder Temperaturen gute tribologische Eigenschaften auf, was bei einer Anwendung als Bremsscheibe vorteilhaft ist.

Die Bremsscheibe und/oder der Bremsbelag derart ausgebildet, dass bei einem Bremsvorgang das Belastungskollektiv aus Temperatur, Druck und Geschwindigkeit die Ausbildung einer auf der Bremsscheiben- und/oder Bremsbelagoberfläche haftendenden, filmartigen Zwischenschicht bewirkt.

In vorteilhafter Weise ist durch das Auftreten der erfindungsgemäßen filmartigen Zwischenschicht eine Stabilisierung des Reibwertverlaufs und damit eine verbessert Bremsleistung zu beobachten. Zudem agiert die filmartige Zwischenschicht als ein Oberflächenschutz gegen Ausbrand der Kohlenstoffbestandteile aus der Bremsscheibenoberfläche und der Bremsbelagoberfläche, so dass ein geringerer Verschleiß der beiden Reibpartner (Scheibe/Belag) und damit eine längere Lebensdauer der Bremsvorrichtung sichergestellt ist. Wie Versuche zudem gezeigt haben, bewirkt die filmartige Zwischenschicht in vorteilhafter Weise eine kurze Einlaufzeit der Bremsvorrichtung.

In die Bremsscheiben - und/oder Bremsbelagoberfläche sind Vertiefungen eingebracht. Die Vertiefungen haben den Effekt, dass diese als ein Reservoir für die bei einem Bremsvorgang entstehenden Abriebpartikel dienen und mit Abriebpartikel gefüllt werden. Durch das vorherrschende Belastungskollektiv des Tribosystems bewirken die Abriebpartikel die Ausbildung der erfindungsgemäßen, auf der Bremsscheiben- und/oder Bremsbelagoberfläche haftenden, filmartigen Zwischenschicht. Die Verwendung einer speziellen Bremsscheibe bzw. eines speziellen Bremsbelags ist nicht erforderlich.

Der Erfindung liegt die Aufgabe zugrunde, eine Bremsvorrichtung für ein Kraftfahrzeug gemäß der im Oberbegriff des Anspruches 1 angegebenen Art derart weiter zu bilden, dass eine verbesserte Leistung bei gleichzeitig verbesserter Lebensdauer gewährleistet ist.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

Nach der Erfindung sind die Vertiefungen kreisförmig ausgebildet und weisen einen Durchmesser von 0,1 mm bis 3 mm und eine Tiefe von 0,05 mm bis 2 mm auf. Wesentlich ist, dass ein Reservoir-Effekt sichergestellt ist.

Die Vertiefungen erfüllen zwei Funktionen: Die Vertiefungen dienen zum einem als Reservoir für die Zwischenschicht und zum anderen unterstützen die Vertiefungen die Haftung der filmartigen Zwischenschicht durch Formschluss. Insbesondere die verbesserten Haftungseigenschaften erweisen sich als besonders vorteilhaft, da hierdurch sichergestellt ist, dass die bei einer Gleitbewegung auftretenden Scherung in die Filmmitte bzw. in die Kontaktzone zwischen Zwischenschicht und Bremsbelag verlagert wird.

Gemäß einer Ausführungsform der Erfindung weist der Bremsbelag eine Bremsbelagzusammensetzung auf, die bei einem Bremsvorgang aufgrund des vorherrschenden Belastungskollektivs aus Druck, Temperatur und Geschwindigkeit "aufschmiert" und damit die Ausbildung der erfindungsgemäßen haftendenden filmartig ausgebildeten Zwischenschicht bewirkt.

Gemäß einer weiteren Ausführungsform der Erfindung ist die filmartige Zwischenschicht als eine separate Beschichtung auf mindestens einen der beiden Reibpartner aufgebracht, um die vorteilhafte, verbesserte Haftwirkung zu erzielen.

Um die o.g. vorteilhaften Effekte der erfindungsgemäßen filmartigen Zwischensicht zu gewährleisten, sollte der Flächenanteil der filmartigen Zwischenschicht auf der Bremsscheiben - und/oder Bremsbelagoberfläche zwischen 20 % bis 100 % liegen.

Der Bremsbelag kann auf organischer oder anorganischer Basis hergestellt sein.

Weitere Vorteile und Anwendungsmöglichkeiten der vorliegenden Erfindung ergeben sich aus der nachfolgenden Beschreibung in Verbindung mit den in der Zeichnung dargestellten Ausführungsbeispielen. Die Erfindung wird im Folgenden an Hand der in den Zeichnungen dargestellten Ausführungsbeispielen näher beschrieben.

In der Beschreibung, den Ansprüchen und in der Zeichnung werden die in der unten angeführten Liste der Bezugszeichen verwendeten Begriffe und zugeordneten Bezugszeichen verwendet. In der Zeichnung bedeuten:
- Fig. 1: eine schematische Darstellung einer ersten Ausführungsform eines Bremssystems;
- Fig. 2: eine zweite Ausführungsform;
- Fig. 3: das Bremssystem aus Fig. 2 in tribologischem Kontakt, und
- Fig. 4: eine Detailansicht einer Bremsscheibe mit eingebrachten Vertiefungen nach der Erfindung, Ausführung a).

In der nachfolgenden Beschreibung und in den Figuren werden zur Vermeidung von Wiederholungen gleiche Bauteile und Komponenten mit gleichen Bezugszeichen gekennzeichnet, sofern keine weitere Differenzierung erforderlich oder sinnvoll ist.

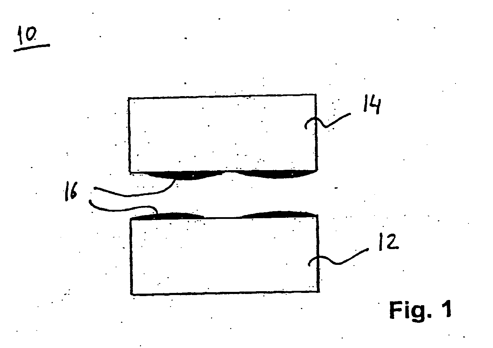

Fig. 1 zeigt in einer schematischen Darstellung eine insgesamt mit der Bezugsziffer 10 bezeichnete Bremsvorrichtung.

Da derartige Bremsvorrichtungen 10 für ein Kraftfahrzeug hinreichend bekannt sind, ist vorliegend aus Gründen der Übersichtlichkeit lediglich ein Ausschnitt einer Bremsscheibe 12 sowie ein Ausschnitt eines Bremsbelags 14 dargestellt.

Die Bremsscheibe 12 ist vorliegend aus einem faserverstärkten Carbon-Siliziumcarbid-Werkstoff (C/SiC) ausgebildet und der Bremsbelag 14 ist auf organischer bzw. anorganischer Basis hergestellt.

Der Bremsbelag 14 weist vorliegend eine Belagzusammensetzung auf, die aufgrund des bei einem Bremsvorgang vorherrschenden Belastungskollektiv aus Druck, Temperatur und Geschwindigkeit aufschmiert und die Ausbildung einer filmartigen Zwischenschicht 16 bewirkt.

Die filmartige Zwischenschicht 16 agiert als Oberflächenschutz gegen Ausbrand der Kohlenstoffbestandteile der Bremsscheibenoberfläche. Auch die Oberfläche des Bremsbelags, die auch Kohlenstoffbestandteile enthält, wird durch die filmartige Zwischenschicht 16 geschützt, so dass eine längere Lebensdauer des Bremssystems 10 sichergestellt ist. Durch die filmartige Zwischenschicht 16 wird zudem ein konstanter und komfortabler Reibverlauf gewährleistet.

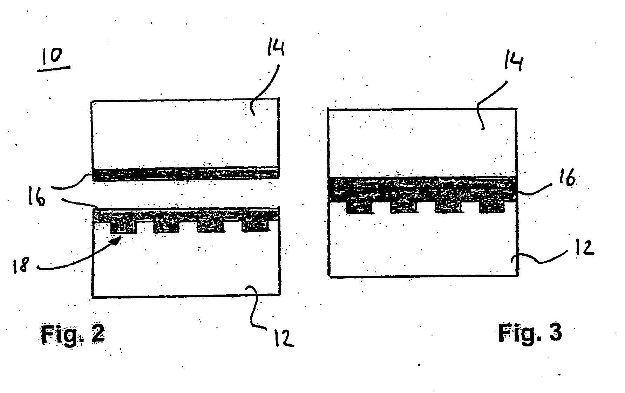

Eine weitere Ausführungsform ist in Fig. 2 und 3 dargestellt. Im Gegensatz zu der in Fig. 1 dargestellten Ausführungsform weist bei dieser Ausführungsform die Bremsscheibe 12 mehrere Vertiefungen 18 in ihrer Oberfläche auf.

Die Vertiefungen 18 dienen als ein Reservoir für die Zwischenschicht 16. Durch die als Reservoir dienenden Vertiefungen 18 wird zum einen die Bildung der filmartigen Zwischenschicht 16 unterstützt als auch eine Stabilisierung der filmartigen Zwischenschicht 16 bewirkt.

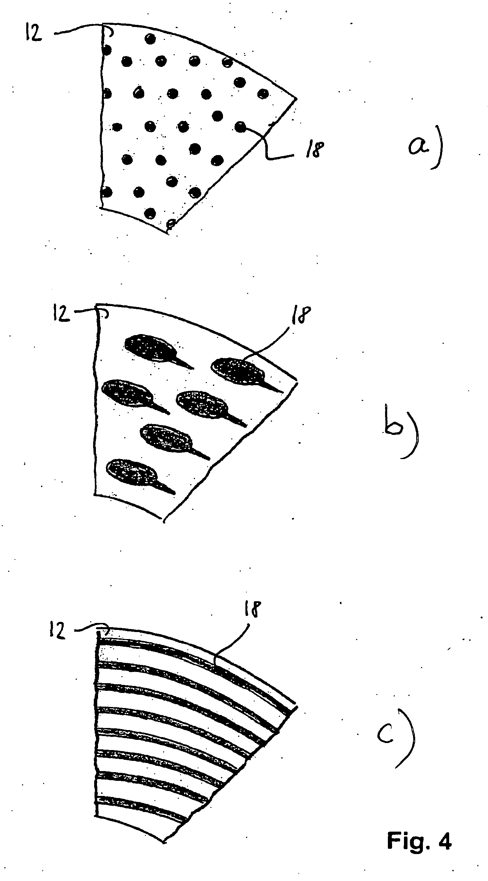

Die Geometrie bzw. die Struktur der Vertiefungen 18 sollte dabei je nach Beanspruchungskollektiv designed werden. Beispiele für eine mögliche Struktur sind in Fig. 4 dargestellt: Wie Versuche gezeigt haben, ist bei einer kreisförmigen Ausbildung der Vertiefungen ein Durchmesser von 0,01 bis 3 mm und eine Tiefe von 0,05 bis 2 mm erforderlich, um die gewünschten Effekte zu erzielen.

### Bezugszeichenliste

- 10: Bremsvorrichtung
- 12: Bremsscheibe
- 14: Bremsbelag
- 16: filmartige Zwischenschicht
- 18: Vertiefungen

## Patentansprüche

1. Bremsvorrichtung (10) für ein Kraftfahrzeug, umfassend eine Bremsscheibe (12) aus einem faserverstärkten Carbon-Siliziumkarbid-Werkstoff (C/SiC) und einen mit der Bremsscheibe (12) tribologisch zusammenarbeitenden Bremsbelag (14), wobei die Bremsscheiben- und/oder Bremsbelagoberfläche Vertiefungen (18) aufweist und die Bremsscheibe (12) und/oder der Bremsbelag (14) derart ausgebildet sind, dass bei einem Bremsvorgang das vorherrschende Belastungskollektiv aus Temperatur, Druck und Geschwindigkeit die Ausbildung einer auf der Bremsscheiben- und/oder Bremsbelagoberfläche haftenden, filmartigen Zwischenschicht (16) bewirkt, **dadurch gekennzeichnet, dass** die Vertiefungen kreisförmig ausgebildet sind und einen Durchmesser von 0,1 mm bis 3 mm und eine Tiefe von 0,05 mm bis 2 mm aufweisen.

2. Bremsvorrichtung nach Anspruch 1, **dadurch gekennzeichnet, dass** der Bremsbelag (14) eine Bremsbelagzusammensetzung aufweist, die aufgrund des Belastungskollektivs aus Temperatur, Druck und Geschwindigkeit aufschmiert und die haftende, filmartige Zwischenschicht (16) bildet.

3. Bremsvorrichtung nach Anspruch 1 oder 2, **dadurch gekennzeichnet, dass** die filmartige Zwischenschicht (16) als eine separate Beschichtung auf der Bremsscheiben - und/oder Bremsbelagoberfläche aufgebracht ist.

4. Bremsvorrichtung nach einem der vorstehenden Ansprüche, **dadurch gekennzeichnet**, die filmartige Zwischenschicht (16) auf der Bremsscheiben- und/oder Bremsbelagoberfläche einen Flächenanteil von 20 % - 100 % einnimmt.

5. Bremsvorrichtung nach einem der vorstehenden Ansprüche, **dadurch gekennzeichnet, dass** der Bremsbelag (14) auf organischer Basis oder anorganischer Basis hergestellt ist.

## Claims

1. Braking device (10) for a motor vehicle, comprising a brake disc (12) made of a fibre-reinforced carbon-silicon carbide material (C/SiC) and a brake pad (14) which cooperates tribologically with the brake disc (12), the surface of the brake disc and/or of the brake pad having depressions (18) and the brake disc (12) and/or the brake pad (14) being formed in such a way that, in the event of a braking operation, the set of prevailing stress factors, consisting of temperature, pressure and speed, causes an adhesive, film-like interlayer (16) to form on the surface of the brake disc and/or of the brake pad, **characterised in that** the depressions have a circular configuration, a diameter of from 0.1 mm to 3 mm and a depth of from 0.05 mm to 2 mm.

2. Braking device according to claim 1, **characterised in that** the brake pad (14) has a brake pad composition which smears in response to the set of stress factors, consisting of temperature, pressure and speed, and forms the adhesive, film-like interlayer (16).

3. Braking device according to either claim 1 or claim 2, **characterised in that** the film-like interlayer (16) is applied to the surface of the brake disc and/or of the brake pad as a separate coating.

4. Braking device according to any of the preceding claims, **characterised in that** the film-like interlayer (16) occupies from 20 % to 100 % of the surface area of the surface of the brake disc and/or of the brake pad.

5. Braking device according to any of the preceding claims, **characterised in that** the brake pad (14) is produced on either an organic or inorganic basis.

## Revendications

1. Dispositif de frein (10) pour un véhicule automobile, comprenant un disque de frein (12) formé d'un matériau (C/SiC) à base de carbone et de carbure de silicium et renforcé par des fibres et une garniture de frein (14) coopérant avec le disque de frein (12) par voie tribologique, dans lequel la surface du disque de frein et/ou de la garniture de frein présente des cavités (18) et le disque de frein (12) et/ou la garniture de frein (14) est ou sont conformés de sorte que, lors d'une manoeuvré de freinage, le collectif de charges ambiantes formées de la température, de la pression et de la vitesse provoque la formation d'une couche intermédiaire (16) filmogène adhérant à la surface du disque de frein et/ou de la garniture de frein, **caractérisé en ce que** les cavités ont une forme circulaire et ont un diamètre de 0,1 mm à 3 mm et une profondeur de 0,05 mm à 2 mm.

2. Dispositif de frein selon la revendication 1, **caractérisé en ce que** la garniture de frein (14) présente une composition qui lubrifie en raison du collectif de charges formées de la température, de la pression et de la vitesse et forme la couche intermédiaire filmogène collante (16).

3. Dispositif de frein selon la revendication 1 ou la revendication 2, **caractérisé en ce que** la couche intermédiaire filmogène (16) est appliquée en revêtement séparé sur la surface du disque de frein et/ou de la garniture de frein.

4. Dispositif de frein selon l'une quelconque des revendications précédentes, **caractérisé en ce que** la couche intermédiaire filmogène (16) occupe sur la surface du disque de frein et/ou de la garniture de frein une fraction de surface de 20 % à 100 %.

5. Dispositif de frein selon l'une quelconque des revendications précédentes, **caractérisé en ce que** la garniture de frein (14) est fabriquée sur base organique ou inorganique.
